# EUROPEAN PATENT SPECIFICATION

(11) **EP 1 491 088 B1**
(45) Date of publication and mention of the grant of the patent: **12.10.2005**
(21) Application number: 03020550.4
(22) Date of filing: 17.09.2003
(51) Int. Cl.: A01G 15/00

(54) **Weather modification by royal rainmaking technology**
Wettermodifizierung durch königliche Regenerzeugungstechnologie
Changement du temps par utilisation de technologie royale pour faire de la pluie

(43) Date of publication of application: 29.12.2004
(73) Proprietor: His Majesty King Bhumibol, Adulyadej of Thailand, Bangkok 10303 (TH)
(72) Inventor: His Majesty King Bhumibol, Adulyadej of Thailand, Bangkok 10303 (TH)
(74) Representative: HOFFMANN EITLE

(56) References cited:
- CH-A- 354 981
- DE-A- 10 005 898
- FR-A- 2 394 979
- GB-A- 988 109
- GB-A- 2 186 781
- US-A- 2 052 626
- US-A- 2 665 168
- US-A- 3 613 992
- US-A- 3 802 624
- US-A- 5 357 865

## Description

This technology of rainmaking involves the knowledge of meteorology, climatology, cloud formation, cloud evolution, rain formation and cloud dispersion of various aspects.

### BACKGROUND OF THE INVENTION

This technology is termed the 'Royal Rainmaking Technology' as it is a unique technology invented by **HIS MAJESTY KING BHUMIBOL ADULYADEJ OF THAILAND**. The technology is developed to help people in Thailand and particularly those farmers who repeatedly face drought disasters due to variation and deviation of the seasons, and in addition as an attempt to solve a seemingly insoluble and paradoxical problem of water management in the North-East region of Thailand, i.e., when there is rain, the water is too much that it floods down the hills because there are not many trees to stop it and thus floods the area, but when water recedes it turns to drought. The solution to this problem is to build many small check dams along the creeks on the hills to regulate the flow of water. Small dams and reservoirs should be built which can take care of the drought. In the rainy season, water kept in the reservoirs can provide water for the dry season. Yet, one problem remains, as overall, the provide water for the dry season. Yet, one problem remains, as overall, the North-East region of Thailand is reputed to be a dry region. Despite the fact that there is lots of cloud in the sky, they are all blown past the arid land. The solution thus lies on how to make those clouds fall as rain in the designated locality.

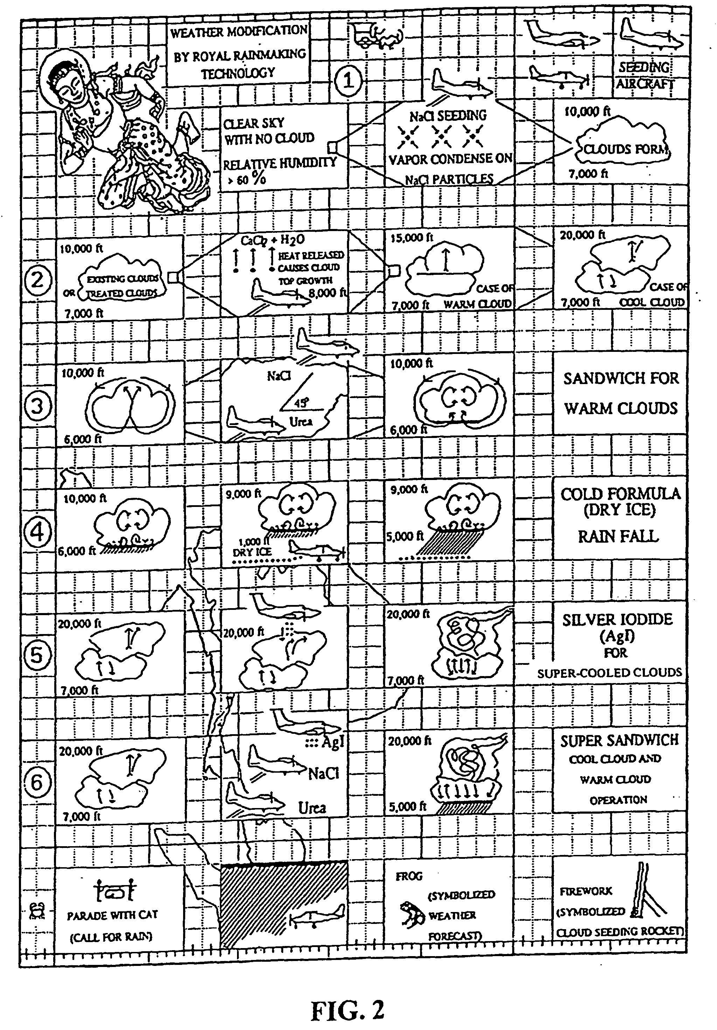

In the old days, people in this North-East region cleverly launched a firework as shown in FIG.2 to function as a traditional cloud seeding device to cause chemical burning underneath the cloud resulting in rainfall. They had to carefully observe behavior of the frogs in the locality as it is well-known that frogs are animal able to indicate the possibility of rainfall. When there was severe draught, people in the village would also perform a cat procession to beg for rain. These components are prior arts and are drawn at the lower part of FIG.2. Statistically, the people would unpredictably get the rain they need due to the inefficiency of the procedure.

The 'Royal Rainmaking Technology' is therefore developed to make rain to fall onto a target area successfully by applying this invented technology and using aircraft. This technology provides sufficient fresh water supplies which may otherwise rapidly become inadequate to serve a growing water demand in each part of the country. It is now further developed to manage the weather especially cloud and rain formation in many different circumstances. The uppermost drawing of FIG. 2 shows a Thai prior belief of a 'Supreme God' named 'Pra Indhra' riding in his special vehicle, 'a flying cart', used for rainmaking operation in Thai legend. A goddess called 'Manimekhala', a computer-drawing by HIS MAJESTY THE KING at the upper left of FIG.2, symbolizes the Meteorological Service performing one of the key roles in the rainmaking operation.

Experiments have been done by dispersing a hygroscopic substance such as sea salt powder from an airplane to catch the humidity in the air and then followed by a cold substance (for instance, dry ice) to condense the humidity to form cloud. Yet problem exists, i.e., when there is no rain, while without enough dry ice it soon dissolves back to the blue sky right after a cloud is formed. If too much dry ice is used, the cloud becomes 'exploded' and thus also is destroyed; where at this stage even spraying the sea water does not help initiate rainfall as the sky remains blue. Therefore, so many factors must be concerned, i.e. humidity, temperature, speed and direction of the wind, and etc. Cloud physics must also be studied in much greater details to make rain efficiently although the basic principles and all the components for rain-making remain the same.

Many experiments have been done thereafter. In general, sea salt and dry ice are still in use while some other chemicals have been discontinued. Many other formulas have later been introduced in the 'Royal Rainmaking Technology', i.e. urea (moderately cold-formula 4), calcium chloride (warm - formula 6), and calcium carbide (very warm - formula 9). The latter formula 9 has now been discontinued as it is rather dangerous. At the first time when calcium chloride was used in the experiment, the prediction was that after building up a cloud with sea salt (formula 1), had calcium chloride (formula 6) been dispersed into the cloud, the cloud would become bigger and rise to a much higher altitude somewhat like a mushroom as of an atomic bomb. When the experiment has been done, the result was a heavy rain of 40 mm, although it rose up like a tall Christmas tree and not in a form of mushroom as expected.

Cloud Dispersion was first experimented as on a return trip from a religious ceremony at Ban Ponge District in Thailand by a helicopter, ominous clouds had formed and threatened to impede the flying. An aircraft had been sent to fly preceding the flight path to disperse calcium chloride all the way to the destination which is Chitralada Villa, Dusit Palace, Thailand. As a result, cloud separated into a clear flight path where both sides along the path appeared as two gigantic walls made of cloud. Upon arriving at Chitralada Villa, the two walls began to close and there was a strong wind which made the return of the helicopter down to the base almost impossible. Soon after, there was then a torrential rain. The experience was thus a successful dispersion of cloud and at the same time it was also a successful operation of rainmaking.

The present invention describes modification of weather regarding rainmaking and moving cloud from one place to a designated target area to cause rainfall in many different circumstances. There has always been problem that water is plenty in some areas where in other areas in the vicinity perhaps only 30 miles away, drought may be a serious problem. Technology is now successfully developed to form cloud in an area where water is plenty, move the cloud formed and attack to cause rainfall in the area in need of water. This should be one of the most successful technology of mankind to overcome the natural disaster in term of developing a most cost-effective way to move such huge amount of water from place to place which may be otherwise impossible if the presently available method of transportation is used. Modification of weather by the 'Royal Rainmaking Technology' makes transportation of water in form of cloud possible. Flood is prevented, and at the same time, problem of drought can be solved. Rainmaking involves cloud formation, cloud evolution, rain initiation and rainfall to a target area as well as to increase the volume of rain and to give a better uniformly distributed falling of rain over a target area than what would be if it occurs naturally. This technology can be applied in many various circumstances to manage rainfall such as lifting a cloud mass stuck to a mountain top upwind to pass over and fall as rain in the area downwind located on the other side of the mountain, or to induce rainfall onto a catchment area of a water reservoir or onto a valley located between hills and mountains, and more. The Royal Rainmaking Technology can also be applied to suppress hail formation to prevent damage to life and crops, or to provide clear view for aviation safety. Both warm cloud whose temperature is above water freezing point, and cool cloud whose temperature is below water freezing point, can be induced using various chemicals of different physical property and hygroscopic property. This technology involves the knowledge of meteorology, climatology, cloud formation, cloud evolution, rain formation and cloud dispersion of various aspects in each season. Many different kinds of chemicals have been experimented. Using the proper chemicals of exothermic or endothermic property when combined with water for cloud formation and cloud seeding is keymanagement in the Royal Rainmaking Technology. The information on cloud statics and dynamics such as condensation to allow formation of cloud condensation nuclei, the loss or gain of latent heat during changing state of water from vapour to liquid and liquid to solid which may cause the updraft of air mass due to vertical heat convection and turbulence occurring either inside or outside the cloud mass, the direction of wind at the locality and on the radiating heat from the sun, must all be taken into account, compiled and applied to successfully achieve the best result of weather modification using this very high technology and very sophisticated procedure. The knowledge of aviation engineering, electrical and electronic engineering together with mechanical engineering must also be applied.

In general, the method of rainmaking comprises mainly 3 steps as follows:
1. Triggering - modification of weather to stimulate or promote formation of cloud;
2. Fattening - gathering and growing of cloud mass to make it sufficiently large and dense; and
3. Attacking - manipulating the dense cloud mass to condense it as rain to fall onto a target area.

Modification may be done to make rain only from warm cloud, if the aircraft used is capable of flying not higher than 10,000 ft. above sea level where the part of a cloud being modified is of 'warm type' which has its temperature above 0° Celsius only. Modification of weather progresses to a point that growing or fattening of cloud can achieve an altitude of 25,000-30,000 ft. The temperature of such cloud at an altitude above 18,000 ft. is generally below 0° Celsius and thus belongs to a 'cool-type'. This technology is, therefore, developed to couple weather modification to make rainfall both from warm cloud and cool cloud simultaneously.

In the prior arts, where rainmaking is performed in temperate or cloud climate, modification of weather is used to form rain or snow from cool cloud by applying chemicals directly into the existing thick cloud. There has never been any technique used for triggering condensation to form a cloud nucleus from moderately humid air or moving a cloud mass to a target area as presently disclosed. This process described is thus distinctly different than what have been disclosed in the prior arts in that, while in an invention (U.S. Patent No. 5,357,865), there must exist certain small cloud formed and that the process they described is plainly precipitation enhancement not a whole process of rainmaking as presently described.

The process described in the present invention is a complete process of rainmaking which can be performed starting right from building a cloud in the sky from nothing except for a relative humidity of not less than 60%, growing such cloud to a cloud mass dense enough either as a warm cloud or a cool cloud, moving the cloud to a target area, then attacking the cloud mass to fall as rain and, in addition, enhancement is also described to increase amount of rainfall and to prolong the raining period as well as to increase area coverage. This is a successful management of weather to help providing water to the dry area as well as to prevent flood or to suppress hail formation. Thus, Thailand would be the first and the only country in the world to use this advanced technology of weather modification invented.

### SUMMARY OF THE INVENTION

The present invention relates to technology for weather modification for rain making and moving water in form of cloud from an area to fall as rain onto a designated target area far away. The process comprises steps of 'Triggering' which is a technique to activate cloud formation using fine powder of hygroscopic materials such as sodium chloride; 'Fattening' which is a technique to encourage or promote cloud growth by dispersing giant nuclei of exothermic-hygroscopic materials such as calcium chloride to cause updraft by exothermic reaction and thereby activate collision and coalescence of the cloud droplets; 'Moving' which is a technique to move cloud mass to a designated target area; and 'Attacking' which is a technique to initiate rainfall from the cloud. Step of attacking can be done by at least 3 different techniques. Firstly, by 'Sandwich Seeding Technique' for 'warm cloud' whose cloud top does not grow beyond the freezing level, giant endothermic-hygroscopic nuclei such as sodium chloride are dispersed into the cloud top and urea at the cloud base simultaneously to increase number of big raindrops and decrease the in-cloud temperature due to endothermic reaction which further increase downdraft within the cloud mass and big raindrops thus start to fall from the cloud base. Secondly, by 'Glaciogenic Seeding Technique' for 'cool cloud' whose cloud top grows well beyond the freezing level where supercooled droplets and ice crystals appear in the cloud top portion, silver iodide flares are burnt into the cloud top to produce rapid glaciation of the supercooled cloud liquid water content in the updraft that the rest of the cloud water can be rimed into graupels which grow much faster than raindrops of the same mass and thus converted into ice precipitation falling through the freezing level and finally melt into raindrops. Thirdly, by 'Super Sandwich Seeding Technique' for mixed warm and cool cloud (mixed phase cloud), where the 'Sandwich Seeding' and 'Glaciogenic Seeding' techniques are combined to provide higher efficiency for process of rain enhancement. Dropping flakes of dry ice at about 1,000 feet below the cloud base results in increase in relative humidity of the air mass underneath the cloud base. The rainfall rate increases gradually and big raindrops can reach the ground. Strong downdraft increases feed back of moist air into the treated and the neighboring cloud bases to cause continuation of rainfall, resulting in much more rainfall in terms of amount and area coverage as well as raining duration, thus called 'Enhancing'. Weather modification further extends to dispersion of heavy cloud into clear flight path, prevention of hail formation, and inducing of rainfall onto a valley or onto anycatchment area of the water reservoirs in various circumstances. Seeding may be performed inside or outside a cloud or to the top or underneath any isolated cloud or cloud band.

### BRIEF DESCRIPTION OF THE DRAWINGS

FIG. 1 is a flow diagram illustrating the overall steps in the operation of the 'Royal Rainmaking Technology' with highlight information.
FIG. 2 is a chart illustrating stepwise operation of the 'Royal Rainmaking Technology'.
FIG. 3 is a blow-up part of FIG. 2 (1) illustrating Step I (Triggering) of the 'Royal Rainmaking Technology'.
FIG. 4 is a blow-up part of FIG. 2 (2) illustrating Step II (Fattening & Moving) of the 'Royal Rainmaking Technology'.
FIG. 5 is a blow-up part of FIG. 2 (3) illustrating Step III (Attacking) which is 'SANDWICH SEEDING' of the 'Royal Rainmaking Technology'.
FIG. 6 is a blow-up part of FIG. 2 (4) illustrating Step IV (Enhancing) of the 'Royal Rainmaking Technology'.
FIG. 7 is a blow-up part of FIG. 2 (5) showing Step V (Glaciogenic or AgI seeding) of the 'Royal Rainmaking Technology'.
FIG. 8 is a blow-up part of FIG. 2 (6) showing Step VI which is "SUPER SANDWICH SEEDING' of the 'Royal Rainmaking Technology'.

### DETAILED DESCRIPTION OF THE PREFERRED EMBODIMENTS

The present invention describes a technology for weather modification to make rain and to move water in form of cloud from one area to fall as rain onto a designated target area far away using the 'Royal Rainmaking Technology'. The 'Royal Rainmaking Technology' is chemical seeding technique for rainmaking, rain stimulation and rain enhancement for modification of weather in various circumstances. The chemical seeding technique involves warm cloud seeding, cool cloud seeding or a combination of the two categories. The technology in general comprises main steps as follows:
- Step I:: Triggering :- to activate cloud formation;
- Step II:: Fattening & Moving :- to stimulate cloud growth and to move cloud mass to a designated target area;
- Step III:: Attacking :- to initiate rainfall from the cloud by 'Sandwich Technique' (attacking warm cloud);
- Step IV:: Enhancing :- to enhance rainfall onto the ground;
- Step V:: AgI Seeding :- attacking cool cloud when cool cloud seeding aircraft is available;
- Step VI:: Super Sandwich Technique:- attacking the cloud formed when both warm and cool cloud seeding aircraft are available. This is a combination of steps III, IV and V.

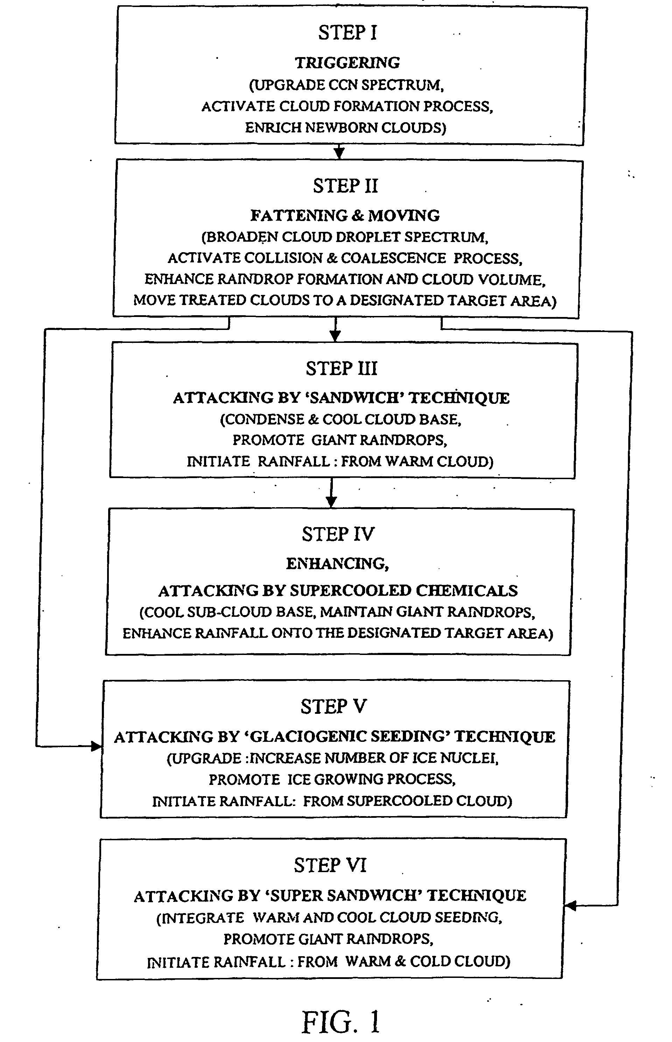

Details in each procedure and the explanation of the reasons and the result of each step, as shown in FIGs. 1 and 2, are as follows:

### STEP I : "Triggering"

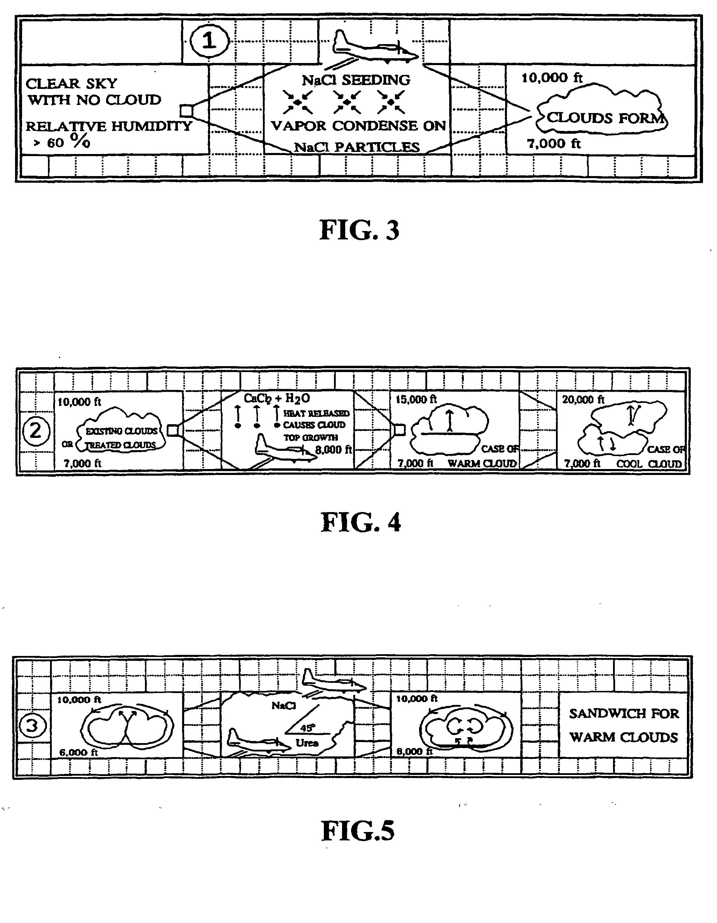

The aim of this step, as shown in FIG. 3, is to activate cloud formation or condensation process and enrich the newborn clouds by upgrading the Cloud Condensation Nuclei (CCN) property and broadening its spectrum in the convective air plumes. So, Step I begins when the sky is clear or only a few cumulus clouds have just formed in the morning and the average relative humidity up to an altitude of 7,000 feet is not less than 60% in the locality.

This step is done by dispersing tons of powder of various size spectrum of low critical relative humidity and hygroscopic chemicals, sodium chloride in this case, into the volume of air at or a few thousand feet above the level of cloud formation or convective condensation level (CCL), at a distance upwind of the designated target area and at a time before natural cloud forming.

After seeding, the condensation to form cloud droplets is more active and a lot more clouds are formed in the treated area. Then clouds will be able to grow by themselves due to continuation of condensation and support by the local convection.

### STEP II: "Fattening" & "Moving"

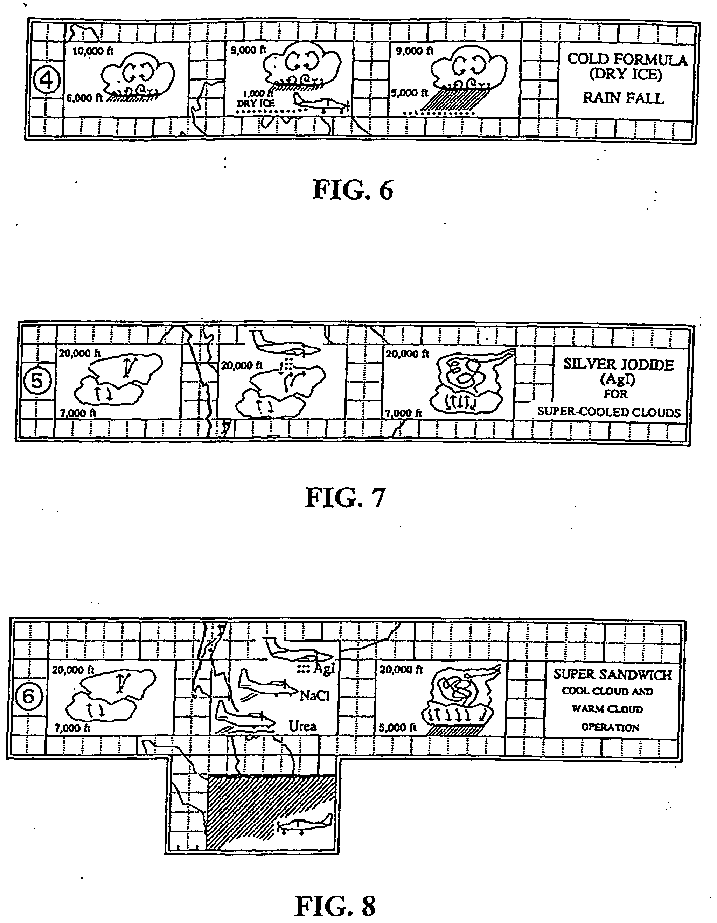

The aim of "Fattening", as shown in FIG. 4, is to increase raindrop formation and to build up cloud volume by promoting Collision and Coalescence Process of the cloud droplets (i.e. to cause broadening of cloud droplet spectrum) and increasing in-clouds updraft due to the energy released from the exothermic reaction. This step begins when the cloud tops of the cumulus clouds formed from Step I reach 10,000 feet.

This step is done by dispersing tons of powder of a few hundred microns of exothermic-hygroscopic chemicals, calcium chloride (CaCl₂), into the updraft portion of clouds at a level of about 8,000 feet.

After seeding, the rate of cloud growth increases due to increasing of the updraft and inducing of moist air into the cloud base. The numbers of big raindrops increase continuously due to active collision and coalescence of cloud droplets.

Clouds grow from this step can be classified into two categories depends on the temperature of the cloud top and the rain producing mechanisms. The two categories of clouds are the 'warm cloud' and the 'cool cloud'. In brief, if the top of the cloud reaches above freezing level in the sky (higher than about 18,000 feet), it is defined as 'cool cloud', otherwise, it is 'warm cloud'.

The aim of "Moving" is to move cloud from one area to cause rainfall in any designated target area far away.

This can be done in many different situations as follows:
Case 1: Moving cloud from a plain area to a neighboring designated target area downwind.
   This is done by dispersing exothermic-hygroscopic chemicals, such as calcium chloride from a dense cloud mass formed by "Fattening" located upwind to a target area at a level not less than 1,000 feet above said cloud base, where dispersion may be drawn as a linear or a coil shape within a cloud mass depending on the circumstances and to the spaces between cloud masses. This causes lifting up and the cloud mass starts moving along the wind to a target locality, then the "Sandwich Technique" (as of Step III) is applied, while simultaneously supercooled chemical such as dry ice is dispersed at a level about 1,000 feet below the cloud base to enhance rainfall.
Case 2: Moving a cloud mass stuck to the windward side of a mountain to pass over and fall as rain in the area downwind located on the other side of the mountain.
   This is done by dispersing exothermic-hygroscopic chemicals, such as calcium chloride at a level not less than 1,000 feet above said cloud base. This causes lifting up of the treated cloud and the cloud mass starts moving along the wind passing over the mountain top to a target locality on the other side of the mountain which is a rain-shadow area, then the "Sandwich Technique"(as of Step III) is applied, while simultaneously supercooled chemical such as dry ice is dispersed at a level about 1,000 feet below the cloud base to cause rainfall. This is one of the most useful technique. The designated target area is quite dry despite there are plenty of water in the area upwind on the opposite side of a mountain as the mountain itself is the main obstacle to stop moving of cloud to the area in need of water. By using this technique, problem of drought in the rain-shadow area downwind of a mountain can be solved.
Case 3: Causing rainfall to expand against direction of wind onto a designated target area from a dense cloud resting on the windward side of a mountain.
   In an area in need of water, cloud forms but is blown away yet is stuck to the windward side of a mountain. To retain such cloud and cause it to fall back as rain onto the locality is possible by fattening cluster of small clouds in the designated target area upwind to the dense cloud mass to cause merging of growing small cloud masses into the dense cloud mass and attacking the growing small cloud masses using 'Sandwich Technique'(as of Step III) to initiate rainfall in the locality and thus cause drawing the dense cloud mass to expand back and fall as rain against direction of the wind onto the designated target area.

Omitting this step of 'Moving", rain can be induced to fallin *situ* at a place where the cloud is built up by step of 'Attacking' either by the 'Sandwich Technique' or 'Glaciogenic Seeding' or 'Super Sandwich Technique' of the Royal Rainmaking Technology.

### STEP III: "Attacking"

The aim of this step, as shown in FIG. 5, is to initiate rainfall from warm clouds by cloud seeding technique called 'Sandwich Technique'. This is the case for warm cloud seeding. The aim of this technique is to initiate rainfall by promoting the giant raindrops to increase in-cloud loading factor and cooling the cloud base due to endothermic reaction. This step begins when the cumulus clouds formed from Step II move along the wind approaching the target area and the cloud tops reach 10,000 feet or higher but can not grow further to reach the freezing level or about 18,000 feet (i.e. the 'warm cloud' type).

This is done by dispersing tons of hygroscopic chemicals at two levels, into the cloud top/shoulder and at the cloud base, at the same time. Powder of the cloud condensation nuclei which is sodium chloride and powder of endothermic-hygroscopic chemicals which is urea in this case are dispersed into the clouds at the top/shoulder and the base, respectively and simultaneous. The two seeding aircraft fly on the opposite side of the clouds making an angle of 45 degrees to each other.

After seeding, the height of the treated cloud base levels down by about 1,000 feet due to the cooling of cloud base temperature and heavy loading of bigger raindrops of the cloud volume. The cloud becomes mature and starts to fall as rain.

### STEP IV: "Enhancing"

The aims of this step, as shown in FIG. 6, are to maintain Step III and to enhance rainfall onto the ground, and in addition, to prolong raining duration by cooling the sub-cloud base air mass resulting in cut off buoyancy, increase the downdraft, increase the relative humidity and reducing the evaporation of the raindrops. This step can be applied after step III which may begin when the treated clouds from step III move along the wind to cover the target area.

This is done by dropping dry ice flakes at about 1,000 feet below the cloud base. The rainfall rate increases gradually, much greater number of giant raindrops reach the ground, strong downdraft increases and feeds back the moisture into the neighboring cloud bases and causes the continuation of rainfall, resulting rain enhancement in terms of the amount, rain duration and area coverage.

### STEP V : "Glaciogenic Seeding or AgI Seeding"

This is the case of 'Attacking' by cool cloud seeding , as shown in FIG. 7, when only the cool cloud seeding aircraft is available. A cool cloud seeding aircraft must have the internal pressure control thus capable of operating at an altitude of 30,000 ft. and must be equipped with all the scientific instruments necessary for measuring and recording the meteorological data. The seeding criteria are that when the cumulus clouds formed from Step II move along the wind approaching a target area and the cloud tops grow above the freezing level and reach 20,000 feet. The qualified clouds must have 0.5 gm/m³ of supercooled liquid water content or higher and 5m/sec in updraft or higher at the level of 21,500 feet.

The aim of this step is to initiate rainfall from cool clouds by supplying the artificial ice nuclei into a cool-cloud top to produce rapid glaciation of the supercooled cloud liquid water content (SLWC) in the updraft by freezing the supercooled droplets so they can rime the rest of the cloud water into graupels. Freezing of droplets enhances the release of latent heat, increases cloud buoyancy, increases the updraft, and induces more moist air into the cloud base. Those seeding-induced graupels grow much faster than raindrops of the same mass so that a larger fraction of the cloud water is converted into ice precipitation before falling through the freezing level and finally melt to be raindrops.

This process is done by ejecting 5 to 15 flares each of 20-gram of silver iodide into the cloud top at the seeding flight altitude of normally about 21,500 feet. Each flares normally bums for about 40 seconds and falls 1 to 1.5 kilometers in the cloud and produces a lot of silver iodide particles to cause freezing of the supercooled droplets.

### STEP VI: Attacking Mixed (warm and cool) cloud by cloud seeding technique called 'Super Sandwich Technique'

This is the case of 'Attacking' by mixed phase cloud seeding , as shown in FIG. 8, when both cool cloud seeding aircraft and warm cloud seeding aircraft are available. The seeding criteria for this case is when cumulus clouds formed from Step II move along the wind and reach the target area and the cloud tops develop above the freezing level and reach over 20,000 feet. The qualified clouds must have 1.0 gm/m³ or higher of supercooled liquid water content and 8 m/sec or higher in updraft at the level of 21,500 feet.

The aim of this Super Sandwich Technique is to initiate rainfall from either cool cloud or mixed phase cloud (in which both warm rain process and ice process are dominant in the same cloud mass) by integration of the Step III, IV, and V. While Step III (the Sandwich Seeding Technique) promotes bigger drops in the strong current of the updraft resulting in much greater supercooled droplets in the cloud top, step V (the AgI Seeding or so-called Glaciogenic Seeding Technique) preferentially freezes the larger supercooled drops so they can rime the rest of the cloud water into graupel much faster. This faster conversion of cloud water into ice precipitation enhances release of latent heat, thus increases cloud buoyancy, increases the updraft, and induces more moist air into the cloud base. A larger fraction of the cloud water is then converted into ice precipitation before falling through the freezing level and finally melts as rain.

Thus, step VI is done by combining warm and cool cloud attacking techniques together simultaneously; in this case by dispersing the endothermic-hygroscopic chemicals such as sodium chloride particles at the mid-cloud level (about 10,000 feet), and urea particles at the cloud base level (Sandwich), ejecting 5 to 15 of 20-gram flares of Silver Iodide into the cloud top at the altitude of about 21,500 feet, and dry ice seeding at 1,000 ft below the cloud base of the same treated clouds, simultaneously.

After seeding by the Super Sandwich Attacking Technique, the treated clouds, in most cases, start to rain right after or shortly after seeding onto the designated target area.

The 'Royal Rainmaking Technology can be further applied to prevent hail formation. By applying the 'Super Sandwich Technique' to cause rainfall at a time point before hail starts to form. Such operation can suppress hail formation and alleviate the damage to life or properties and especially the agriculture crops. Furthermore, to provide clear view of the flight path for aviation safety, over-seeding is done by dispersing excess amount of exothermic-hygroscopic chemicals, such as powder of calcium chloride into a cloud mass. The dense cloud mass will separate into a clear flight path.

Causing rainfall from stratiform clouds in a valley or any catchment areas between hills and mountains where access to the area is quite difficult, can be done by dropping alternately exothermic-hygroscopic chemicals such as calcium chloride and endothermic-hygroscopic chemicals such as urea to cover the clouds while dispersing hygroscopic chemicals such as sodium chloride on top of the developing clouds. This can successfully cause sufficient amount of rainfall.

The technology can be used to augment water for reservoir storage and to provide additional water for rainfed agriculture. More rain in the catchment areas of major reservoirs would provide more water storage for irrigation in all seasons. More water in the reservoirs would help enhance agriculture in the ever-expanding irrigated areas in the case that the existing water supplies may otherwise be insufficient. The hydropower generation can meet base and peak loads by the water production from the 'Royal Rainmaking Technology' and minimize the national dependence on fossil fuel to generate power. This additional fresh water, at the same time, helps alleviate salinity and pollution problems downstream.

It is thus quite obvious that the advantages of the present invention using the Royal Rainmaking Technology described above is immense and is a great progress invented in modification of weather.

The present invention and many of its attendant advantages will be understood from the foregoing description that modification can be made without departing from the scope of this invention by one of ordinary skill in the art. It is accordingly intended that all matter contained in the above description or shown in the accompanying drawings be interpreted as illustrative rather than in a limiting sense.

It is also to be understood that the following claims are intended to cover all of the generic and specific features of the invention as described herein, and all statements of the scope of the invention which, as a matter of language, might be said to fall therebetween.

## Claims

1. Method of weather modification using "Royal Rainmaking Technology' by means of chemical seeding for cloud formation, cloud growth, rain initiation and rain enhancement to cause rainfall from warm clouds comprising steps of:
"Triggering", which is to activate cloud formation and enrich newborn cloud, wherein cloud condensation nuclei (CCN) of one or more hygroscopic chemicals are dispersed into volume of air at a level of cloud formation or a few thousand feet above a level of cloud formation or convective condensation level (CCL) at a distance upwind to the designated target area;
"Fattening", which is to promote raindrop formation and building up of cloud volume, wherein powder of exothermic-hygroscopic chemical(s) is dispersed into the updraft portion of cloud at a level above the cloud base;
"Attacking", which is to initiate rainfall from warm clouds, which is called the "Sandwich Technique" wherein a first endothermic-hygroscopic chemical(s) is dispersed into the cloud top/shoulder and a second endothermic-hygroscopic chemical(s) at the cloud base, respectively and simultaneously; and
"Enhancing", which is to enhance the volume of rainfall onto the designated target area, area coverage and to prolong rain duration, wherein supercooled chemical(s) are further dispersed below the cloud base.

2. Method of weather modification using "Royal Rainmaking Technology" as of Claim 1, wherein said hygroscopic chemical(s) used in the "Triggering" step is, preferably, sodium chloride.

3. Method of weather modification using "Royal Rainmaking Technology" as of Claim 1 or 2, wherein said exothermic-hygroscopic chemical(s) used in the "Fattening" step is, preferably, calcium chloride.

4. Method of weather modification using "Royal Rainmaking Technology" as of any one of Claims 1 to 3, wherein said first endothermic-hygroscopic chemical(s) to be dispersed into said cloud top/shoulder in the "Attacking" step is, preferably, powder of sodium chloride.

5. Method of weather modification using "Royal Rainmaking Technology" as of any one of Claims 1 to 4, wherein said second endothermic-hygroscopic chemical(s) to be dispersed at said cloud base in the "Attacking" step is, preferably, urea.

6. Method of weather modification using "Royal Rainmaking Technology" as of any one of Claims 1 to 5, wherein said supercooled chemical(s) to be dispersed below said cloud base in the "Enhancing" step is, preferably, dry ice.

7. Method of weather modification using "Royal Rainmaking Technology" by means of chemical seeding to cause cloud formation, cloud growth, rain initiation and enhancement to cause rainfall from mixed phase, that is warm and cool clouds comprising the steps of:
"Triggering", which is to activate cloud formation and enrich newborn cloud, wherein cloud condensation nuclei (CCN) of one or more hygroscopic chemical(s) are dispersed into volume of air at a level of cloud formation or a few thousand feet above a level of cloud formation or convective condensation level (CCL) at a distance upwind to a designated target area;
"Fattening", which is to promote raindrop formation and building up of cloud volume, wherein powder of exothermic-hygroscopic chemical(s) is dispersed into the updraft portion of cloud at a level above the cloud base;
"Attacking", which is to initiate and enhance rainfall from mixed phase, that is warm and cool clouds which is called "Super Sandwich Technique", wherein a first and a second endothermic-hygroscopic chemical(s) are dispersed at mid-cloud level and at cloud base, respectively and simultaneously, and wherein glaciogenic chemical(s) is seeded into the top of said cloud and supercooled chemical(s) is dispersed below said cloud base simultaneously.

8. Method of weather modification using "Royal Rainmaking Technology" as of Claim 7, wherein
the hygroscopic chemical(s) used in the "Triggering" step is, preferably, sodium chloride;
said powder of exothermic-hygroscopic chemical(s) to be dispersed into updraft portion of cloud in the "Fattening" step is, preferably, calcium chloride;
wherein in the "Attacking" step, said first endothermic-hygroscopic chemical(s) to be dispersed at mid-cloud level is, preferably, powder of sodium chloride, and said second endothermic-hygroscopic chemical(s) to be dispersed at cloud base is, preferably, urea; and
wherein in the "Attacking" step said glaciogenic chemical(s) to be seeded into the top of said cloud is, preferably, silver iodide, and said supercooled chemical(s) to be dispersed below said cloud base is, preferably, dry ice.

9. Method of weather modification using "Royal Rainmaking Technology" by means of chemical seeding for moving the cloud and rainmaking, to cause cloud formation, cloud growth, moving of cloud, rain initiation, and rain enhancement comprising steps of
"Triggering", which is to activate cloud formation and enrich newborn cloud by dispersing CCN of hygroscopic chemicals into volume of air at or a few thousand feet above the level of cloud formation or CCL at a distance upwind of a designated target area;
"Fattening", which is to promote raindrop formation and building up of cloud volume by dispersing exothermic-hygroscopic chemical(s) into the updraft portion of cloud at a level above the cloud base;
"Moving", which is to move the cloud formed to a designated target area by dispersing exothermic-hygroscopic chemical(s) into said cloud mass and to the spaces between the cloud masses to cause lifting up and moving of the cloud mass along the wind to a designated target area on a plain or allowing the passing of the cloud mass over a mountain top whereof to be attacked and to fall as rain onto a target locality;
"Attacking", which is to initiate rainfall from said cloud by "Sandwich Technique" using endothermic-hygroscopic chemical(s) dispersed into the cloud top/shoulder and at the cloud base, or by "Super Sandwich Technique" using endothermic-hygroscopic chemical(s) dispersed at mid-cloud level and at the cloud base level and using glaciogenic chemical(s) seeded into the top of the cloud, and supercooled chemical(s) dispersed below the cloud base; and
"Enhancing", to enhance volume of rainfall onto the designated target area, area coverage, and, in addition, to prolong rain duration using supercooled chemicals further dispersed below said cloud base.

10. Method of weather modification using "Royal Rainmaking Technology" by means of chemical seeding for moving the cloud and rainmaking as of Claim 9, wherein said exothermic-hygroscopic chemical(s) used in the "Fattening" step is, preferably, calcium chloride.

11. Method of weather modification using "Royal Rainmaking Technology" by means of chemical seeding for expanding rainfall against wind direction from a dense cloud resting on windward side of a mountain, comprising two steps of Claim 1 as follows:
"Fattening", which is growing bigger of pre-existing small clouds upwind to merge with said dense cloud mass by dispersing powder of exothermic-hygroscopic chemical(s), preferably, calcium chloride, into the updraft portion of said small clouds, and
"Attacking", which is causing rainfall from the growing clouds by dispersing a first endothermic-hygroscopic chemical(s), preferably powder of sodium chloride into said cloud top/shoulder and a second endothermic-hygroscopic chemical(s), preferably, urea, at said cloud base, simultaneously; to cause expansion of area of rainfall from said dense cloud to a designated target area upwind.

12. Method of weather modification using "Royal Rainmaking Technology" by means of chemical seeding as of Claim 1, wherein said chemical seeding can be performed inside or outside a cloud or to the top or underneath said cloud either of an isolated cloud or any cloud band.

13. Method of weather modification using "Royal Rainmaking Technology" by means of chemical seeding to initiate precipitation from cool cloud or mixed phase cloud comprising step of "Attacking" as of Claim 7 operating at a stage prior to formation of hail.

14. Method of weather modification using "Royal Rainmaking Technology" by means of chemical seeding to cause rainfall from stratiform clouds covering an area comprising steps using chemical seeding as of Claim 1 modified by dropping alternately, exothermic-hygroscopic chemicals, and endothermic-hygroscopic chemicals, to cover said clouds and dispersing hygroscopic chemicals, on top of the developing clouds.

## Patentansprüche

1. Verfahren zur Wettermodifizierung unter Verwendung der "Königlichen Regenerzeugungstechnologie" mit Hilfe chemischer Impfung zur Wolkenbildung, Wolkenwachstum, Regeneinleitung und Regenverstärkung, um Regenfall aus warmen Wolken hervorzurufen, welches die folgenden Schritte umfaßt:
"Auslösen", welches die Aktivierung der Wolkenbildung und die Anreicherung neugeborener Wolken ist, wobei Wolkenkondensationskerne ("cloud condensation nuclei", CCN) einer oder mehrerer hygroskopischer Chemikalien in ein Luftvolumen in einer Höhe der Wolkenbildung oder ein paar Tausend Fuß oberhalb der Höhe der Wolkenbildung oder der konvektiven Kondensationshöhe ("convective condensation level", CCL) in einem Abstand windwärts zum vorgesehenen Zielgebiet dispergiert werden;
"Fettmachen", welches die Förderung der Regentropfenbildung und der Aufbau von Wolkenvolumen ist, wobei Pulver exothermer-hygroskopischer Chemikalie(n) in den Aufwindteil der Wolke in einer Höhe oberhalb der Wolkenbasis dispergiert wird;
"Attackieren", welches die Einleitung von Regenfall aus warmen Wolken ist, was die "Sandwich-Technik" genannt wird, wobei jeweils gleichzeitig (eine) erste endotherme-hygroskopische Chemikalie(n) in die Wolkenobergrenze/schulter und (eine) zweite endotherme-hygroskopische Chemikalie(n) an der Wolkenbasis dispergiert wird (werden); und
"Verstärken", welches die Verstärkung des Regenfallvolumens auf das vorgesehene Zielgebiet, die Gebietsabdeckung und die Verlängerung der Regendauer ist, wobei ferner unterkühlte Chemikalie(n) unterhalb der Wolkenbasis dispergiert wird (werden).

2. Verfahren zur Wettermodifizierung unter Verwendung der "Königlichen Regenerzeugungstechnologie" gemäß Anspruch 1, wobei die im "Auslösen"-Schritt verwendete(n) hygroskopische(n) Chemikalie(n) vorzugsweise Natriumchlorid ist (sind).

3. Verfahren zur Wettermodifizierung unter Verwendung der "Königlichen Regenerzeugungstechnologie" gemäß Anspruch 1 oder 2, wobei die im "Fettmachen"-Schritt verwendete(n) exotherme(n)-hygroskopische(n) Chemikalie(n) vorzugsweise Calciumchlorid ist (sind).

4. Verfahren zur Wettermodifizierung unter Verwendung der "Königlichen Regenerzeugungstechnologie" gemäß mindestens einem der Ansprüche 1 bis 3, wobei die erste(n) endotherme(n)-hygroskopische(n) Chemikalie(n), die im "Attackieren"-Schritt in die Wolkenobergrenze/schulter dispergiert werden soll (sollen), vorzugsweise Natriumchloridpulver ist (sind).

5. Verfahren zur Wettermodifizierung unter Verwendung der "Königlichen Regenerzeugungstechnologie" gemäß mindestens einem der Ansprüche 1 bis 4, wobei die zweite(n) endotherme(n)-hygroskopische(n) Chemikalie(n), die im "Attackieren"-Schritt in die Wolkenbasis dispergiert werden soll (sollen), vorzugsweise Harnstoff ist (sind).

6. Verfahren zur Wettermodifizierung unter Verwendung der "Königlichen Regenerzeugungstechnologie" gemäß mindestens einem der Ansprüche 1 bis 5, wobei die unterkühlte(n) Chemikalie(n), die im "Verstärken"-Schritt unter die Wolkenbasis dispergiert werden soll (sollen), vorzugsweise Trockeneis ist (sind).

7. Verfahren zur Wettermodifizierung unter Verwendung der "Königlichen Regenerzeugungstechnologie" mit Hilfe chemischer Impfung zur Verursachung von Wolkenbildung, Wolkenwachstum, Regeneinleitung und -verstärkung, um Regenfall aus Mischphasen-, d.h. warmen und kalten Wolken hervorzurufen, welches die folgenden Schritte umfaßt:
"Auslösen", welches die Aktivierung der Wolkenbildung und Anreicherung neugeborener Wolken ist, wobei Wolkenkondensationskerne ("cloud condensation nuclei", CCN) einer oder mehrerer hygroskopischer Chemikalien in ein Luftvolumen in einer Höhe der Wolkenbildung oder paar Tausend Fuß oberhalb der Höhe der Wolkenbildung oder konvektiven Kondensationshöhe ("convective condensation level", CCL) in einem Abstand windwärts zu einem vorgesehen Zielgebiet dispergiert werden;
"Fettmachen", welches die Förderung der Regentropfenbildung und der Aufbau von Wolkenvolumen ist, wobei Pulver exothermer-hygroskopischer Chemikalie(n) in den Aufwindteil der Wolke in einer Höhe oberhalb der Wolkenbasis dispergiert wird;
"Attackieren", welches die Einleitung und Verstärkung von Regenfall aus Mischphasen-, d.h. warmen und kalten Wolken ist, was die "Super Sandwich Technik" genannt wird, wobei (eine) erste und (eine) zweite endotherme-hygroskopische Chemikalie(n) jeweils gleichzeitig in Höhe der Wolkenmitte und an der Wolkenbasis dispergiert wird (werden), und wobei glaciogene Chemikalie(n) in die Obergrenze der Wolke eingeimpft wird (werden) und
gleichzeitig unterkühlte Chemikalie(n) unterhalb der Wolkenbasis dispergiert wird (werden).

8. Verfahren zur Wettermodifizierung unter Verwendung der "Königlichen Regenerzeugungstechnologie" gemäß Anspruch 7,
wobei die im "Auslösen"-Schritt verwendete(n) hygroskopische Chemikalie(n) vorzugsweise Natriumchlorid ist (sind);
das Pulver der exothermen-hygroskopischen Chemikalie(n), das im "Fettmachen"-Schritt in den Aufwindteil der Wolke dispergiert werden soll, vorzugsweise Calciumchlorid ist;
wobei im "Attackieren"-Schritt die erste(n) endotherme(n)-hygroskopische(n) Chemikalie(n), die in Höhe der Wolkenmitte dispergiert werden soll (sollen), vorzugsweise Natriumchloridpulver ist (sind), und die zweite (n) endotherme(n)-hygroskopische(n) Chemikalie(n), die an der Wolkenbasis dispergiert werden soll (sollen), vorzugsweise Harnstoff ist (sind); und wobei im "Attackieren"-Schritt die glaciogene Chemikalie(n), die in die Obergrenze der Wolke eingeimpft werden soll (sollen), vorzugsweise Silberiodid ist (sind), und die unterkühlte Chemikalie(n), die unterhalb der Wolkenbasis dispergiert werden soll (sollen), vorzugsweise Trockeneis ist (sind).

9. Verfahren zur Wettermodifizierung unter Verwendung der "Königlichen Regenerzeugungstechnologie" mit Hilfe chemischer Impfung zur Verschiebung der Wolke und Regenerzeugung zur Verursachung von Wolkenbildung, Wolkenwachstum, Verschiebung von Wolken, Regeneinleitung und Regenverstärkung, welches die folgenden Schritte umfaßt:
"Auslösen", welches die Aktivierung der Wolkenbildung und die Anreicherung neugeborener Wolken durch Dispergieren von CCN hygroskopischer Chemikalien in ein Luftvolumen in der Höhe oder ein paar Tausend Fuß oberhalb der Höhe der Wolkenbildung oder CCL in einem Abstand windwärts eines vorgesehenen Zielgebiets ist;
"Fettmachen", welches die Förderung der Regentropfenbildung und der Aufbau von Wolkenvolumen durch Dispergieren exothermer-hygroskopischer Chemikalie(n) in den Aufwindteil der Wolke in einer Höhe oberhalb der Wolkenbasis ist;
"Verschieben", welches das Verschieben der gebildeten Wolke in ein vorgesehenes Zielgebiet ist, indem exotherme-hygroskopische Chemikalie(n) in die Wolkenmasse und die Zwischenräume zwischen den Wolkenmassen dispergiert wird (werden), um das Emporheben und das Verschieben der Wolkenmasse entlang des Windes in ein vorgesehenes Zielgebiet in einer Ebene oder das Passierenlassen der Wolkenmasse über einen Berggipfel, wo sie attackiert werden soll und als Regen auf einen Zielort fallen soll, zu verursachen;
"Attackieren", welches die Einleitung von Regenfall aus der Wolke mit der "Sandwich-Technik" ist, indem endotherme-hygroskopische Chemikalie(n), dispergiert in die Wolkenobergrenze/schulter und an der Wolkenbasis verwendet wird (werden), oder mit der "Super Sandwich-Technik", indem endotherme-hygroskopische Chemikalie(n), dispergiert in der Wolkenmittelhöhe und in der Wolkenbasishöhe verwendet wird (werden) und indem glaciogene Chemikalie(n), eingeimpft in die Obergrenze der Wolke, und unterkühlte Chemikalie(n), dispergiert unterhalb der Wolkenbasis, verwendet werden; und
"Verstärken", um das Volumen des Regenfalls auf das vorgesehene Zielgebiet, die Gebietsabdeckung zu verstärken und zusätzlich die Regendauer zu verlängern unter Verwendung unterkühlter Chemikalie(n), die ferner unterhalb der Wolkenbasis dispergiert wird (werden).

10. Verfahren zur Wettermodifizierung unter Verwendung der "Königlichen Regenerzeugungstechnologie" mit Hilfe chemischer Impfung zur Verschiebung der Wolke und Regenerzeugung gemäß Anspruch 9, wobei die im "Fettmachen"-Schritt verwendete(n) exotherme(n)-hydroskopische(n) Chemikalie(n) vorzugsweise Calciumchlorid ist (sind).

11. Verfahren zur Wettermodifizierung unter Verwendung der "Königlichen Regenerzeugungstechnologie" mit Hilfe chemischer Impfung zur Ausdehnung von Regenfall gegen die Windrichtung aus einer dichten Wolke, die an der windwärtigen Seite eines Berges ruht, welches zwei Schritte von Anspruch 1 wie folgt umfaßt:
"Fettmachen", welches das Größerwachsen von vorexistierenden kleinen Wolken windwärts zur Vereinigung mit der dichten Wolkenmasse ist, durch Dispergieren von Pulver exothermer-hygroskopischer Chemikalie(n), vorzugsweise Calciumchlorid, in den Aufwindteil der kleinen Wolken, und
"Attackieren", welches das Hervorrufen von Regenfall aus den wachsenden Wolken ist, indem (eine) erste endotherme-hygroskopische Chemikalie(n), vorzugsweise Natriumchloridpulver, in die Wolkenobergrenze/schulter und (eine) zweite endotherme-hygroskopische Chemikalie(n), vorzugsweise Harnstoff, gleichzeitig in die Wolkenbasis dispergiert werden, um die Ausdehnung der Fläche des Regenfalls aus der dichten Wolke in ein vorgesehenes Zielgebiet windwärts hervorzurufen.

12. Verfahren zur Wettermodifizierung unter Verwendung der "Königlichen Regenerzeugungstechnologie" mit Hilfe chemischer Impfung gemäß Anspruch 1, wobei die chemische Impfung innerhalb oder außerhalb einer Wolke oder an der Obergrenze oder unterhalb der Wolke entweder einer isolierten Wolke oder eines Wolkenbands durchgeführt werden kann.

13. Verfahren zur Wettermodifizierung unter Verwendung der "Königlichen Regenerzeugungstechnologie" mit Hilfe chemischer Impfung zur Einleitung von Niederschlag aus kühlen Wolken oder Mischphasenwolken, welches den Schritt des "Attackierens" gemäß Anspruch 7 umfaßt, der in einer Stufe vor der Hagelbildung operiert.

14. Verfahren zur Wettermodifizierung unter Verwendung der "Königlichen Regenerzeugungstechnologie" mit Hilfe chemischer Impfung zum Hervorrufen von Regenfall aus schichtförmigen Wolken, die ein Gebiet bedecken, welches die Schritte der Verwendung von chemischer Impfung gemäß Anspruch 1 umfaßt, welche modifiziert sind durch abwechselndes Abwerfen exothermer-hygroskopischer Chemikalien und endothermer-hygroskopischer Chemikalien, um die Wolken zu bedecken, und die Dispergierung hygroskopischer Chemikalien oben auf die sich entwickelnden Wolken.

## Revendications

1. Procédé de modification du temps utilisant la "technologie royale pour faire de la pluie" au moyen d'un ensemencement chimique pour la formation d'un nuage, la croissance d'un nuage, l'amorçage de la pluie et le renforcement de la pluie pour provoquer une averse à partir de nuages chauds comprenant les étapes consistant en :
"un déclenchement", qui consiste à activer une formation de nuage et à enrichir un nuage naissant, dans lequel les noyaux de condensation du nuage (NCN) d'un ou plusieurs produits chimiques hygroscopiques sont dispersés dans un volume d'air à un niveau de formation de nuage ou bien à quelques milliers de pieds au-dessus d'un niveau de formation de nuage ou d'un niveau de condensation par convexion (NCC) à une distance au vent de la zone cible désignée,
"un épaississement", qui consiste à favoriser la formation des gouttes de pluie et à construire un volume de nuage, dans lequel de la poudre d'un produit ou de produits chimiques hygroscopiques exothermiques est dispersée dans la partie de courant d'air ascendant du nuage à un niveau au-dessus de la base du nuage,
"une attaque", qui consiste à amorcer une averse à partir de nuages chauds, qui est appelée la "technique en sandwich" dans laquelle un premier ou des premiers produits chimiques hygroscopiques endothermiques sont dispersés dans le haut/l'épaulement du nuage et un second ou des seconds produits chimiques hygroscopiques endothermiques à la base du nuage, respectivement et simultanément, et
"un renforcement", qui consiste à renforcer le volume de l'averse sur la zone cible désignée, la couverture de la zone et à prolonger la durée de la pluie, dans lequel un ou des produits chimiques surrefroidis sont en outre dispersés en dessous de la base du nuage.

2. Procédé de modification du temps utilisant la "technologie royale pour faire de la pluie" selon la revendication 1, dans lequel ledit ou lesdits produits chimiques hygroscopiques utilisés dans l'étape de "déclenchement" sont, de préférence, du chlorure de sodium.

3. Procédé de modification du temps utilisant la "technologie royale pour faire de la pluie" selon la revendication 1 ou 2, dans lequel ledit ou lesdits produits chimiques hygroscopiques exothermiques utilisés dans l'étape "d'épaississement" sont, de préférence, du chlorure de calcium.

4. Procédé de modification du temps utilisant la "technologie royale pour faire de la pluie" selon l'une quelconque des revendications 1 à 3, dans lequel ledit premier ou leudite premiers produits chimiques hygroscopiques endothermiques à disperser dans ledit haut/épaulement du nuage dans l'étape "d'attaque" sont, de préférence, de la poudre de chlorure de sodium.

5. Procédé de modification du temps utilisant la "technologie royale pour faire de la pluie" selon l'une quelconque des revendications 1 à 4, dans lequel ledit second ou lesdits seconds produits chimiques hygroscopiques endothermiques à disperser à ladite base du nuage dans l'étape "d'attaque" sont, de préférence, de l'urée.

6. Procédé de modification du temps utilisant la "technologie royale pour faire de la pluie" selon l'une quelconque des revendications 1 à 5, dans lequel ledit produit ou lesdits produits chimiques surrefroidis à disperser en dessous de ladite base du nuage dans l'étape de "renforcement" sont, de préférence, de la glace sèche.

7. Procédé de modification du temps utilisant la "technologie royale pour faire de la pluie" au moyen d'un ensemencement chimique pour provoquer une formation de nuage, une croissance de nuage, un amorçage et un renforcement de la pluie afin de provoquer une averse à partir d'une phase mixte, c'est-à-dire des nuages chauds et froids comprenant les étapes consistant en :
"un déclenchement", qui consiste à activer une formation de nuage et à enrichir un nuage naissant, dans lequel les noyaux de condensation du nuage (NCN) d'un ou plusieurs produits chimiques hygroscopiques sont dispersés dans un volume d'air à un niveau de formation de nuage ou à quelques milliers de pieds au-dessus d'un niveau de formation de nuage ou d'un niveau de condensation par convexion (NCC) à une certaine distance au vent d'une zone cible désignée,
"un épaississement" qui consiste à favoriser une formation de gouttes de pluie et à construire un volume de nuage, dans lequel de la poudre d'un produit ou de produits chimiques hygroscopiques exothermiques est dispersée dans la partie de courant d'air ascendant du nuage à un niveau au-dessus de la base du nuage,
"une attaque" qui consiste à amorcer et à renforcer une averse à partir d'une phase mixte, c'est-à-dire des nuages chauds et froids, ce qui est appelé "super technique en sandwich", dans laquelle un premier et un second ou des premiers et des seconds produits chimiques hygroscopiques endothermiques sont dispersés à un niveau moyen du nuage et à la base du nuage, respectivement et simultanément, et dans lequel un ou des produits chimiques générateurs de glace sont ensemencés dans le haut dudit nuage et un ou des produits chimiques surrefroidis sont dispersés en dessous de ladite base du nuage simultanément.

8. Procédé de modification du temps utilisant la "technologie royale pour faire de la pluie" selon la revendication 7, dans lequel
le ou les produits chimiques hygroscopiques utilisés dans l'étape de "déclenchement" sont, de préférence, du chlorure de sodium,
ladite poudre de produit ou de produits hygroscopiques exothermiques à disperser dans la partie de courant d'air ascendant
du nuage dans l'étape "d'épaississement" est, de préférence du chlorure de calcium,
dans lequel dans l'étape "d'attaque", ledit premier ou lesdits premiers produits chimiques hygroscopiques endothermiques à disperser au niveau moyen du nuage sont de préférence de la poudre de chlorure de sodium et ledit second ou lesdits seconds produits chimiques hygroscopiques endothermiques à disperser à la base du nuage sont, de préférence, de l'urée, et dans lequel dans l'étape "d'attaque" ledit ou lesdits produits chimiques générateurs de glace à ensemencer dans le haut dudit nuage sont, de préférence, de l'iodure d'argent, et ledit ou lesdits produits chimiques surrefroidis à disperser en dessous de ladite base du nuage sont, de préférence, de la glace sèche.

9. Procédé de modification du temps utilisant la "technologie royale pour faire de la pluie" au moyen d'un ensemencement chimique pour déplacer le nuage et faire de la pluie, pour provoquer une formation de nuage, une croissance de nuage, un déplacement du nuage, un amorçage de la pluie et un renforcement de la pluie comprenant les étapes consistant en
"un déclenchement" qui consiste à activer une formation de nuage et à enrichir un nuage naissant en dispersant des NCN de produits chimiques hygroscopiques dans un volume d'air au niveau ou à quelques milliers de pieds au-dessus du niveau de formation du nuage ou d'un NCC à une distance au vent d'une zone cible désignée,
"un épaississement" qui consiste à favoriser une formation des gouttes de pluie et une construction du volume du nuage en dispersant un ou des produits chimiques hygroscopiques exothermiques dans la partie de courant d'air ascendant du nuage à un niveau au-dessus de la base du nuage,
"un déplacement", qui consiste à déplacer le nuage formé vers une zone cible désignée en dispersant un ou des produits chimiques hygroscopiques exothermiques dans ladite masse du nuage et dans les espaces entre les masses des nuages afin de provoquer une ascension et un déplacement de la masse du nuage dans le vent vers une zone cible désignée sur une plaine ou de permettre le passage de la masse de nuage sur un sommet de montagne d'où elle peut être attaquée et tomber sous forme de pluie sur une localisation cible,
"une attaque", qui consiste à amorcer une averse à partir dudit nuage par une "technique de sandwich" en utilisant un ou des produits chimiques hygroscopiques endothermiques dispersés dans le haut/l'épaulement du nuage et à la base du nuage, ou bien par une "super technique ensandwich" utilisant un ou des produits chimiques hygroscopiques endothermiques dispersés à un niveau moyen du nuage et au niveau de la base du nuage et en utilisant un ou des produits chimiques générateurs de glace ensemencés dans le haut du nuage, et un ou des produits chimiques surrefroidis dispersés en dessous de ladite base du nuage, et
"un renforcement" pour renforcer le volume de l'averse sur la zone cible désignée, la couverture de la zone, et en outre, pour prolonger la durée de la pluie en utilisant des produits chimiques surrefroidis dispersés en plus en dessous de ladite base du nuage.

10. Procédé de modification du temps utilisant la "technologie royale pour faire de la pluie" au moyen d'un ensemencement chimique pour déplacer le nuage et faire de la pluie selon la revendication 9, dans lequel ledit ou lesdits produits chimiques hygroscopiques exothermiques utilisés dans l'étape "d'épaississement" sont, de préférence, du chlorure de calcium.

11. Procédé de modification du temps utilisant la "technologie royale pour faire de la pluie" au moyen d'un ensemencement chimique pour étendre l'averse contre la direction du vent à partir d'un nuage dense immobilisé du côté au vent d'une montagne, comprenant deux étapes de la revendication 1, comme suit :
"un épaississement" qui consiste à faire grossir des petits nuages préexistants au vent pour les fusionner avec ladite masse de nuage dense en dispersant une poudre de produit ou de produits hygroscopiques exothermiques, de préférence du chlorure de calcium, dans la partie de courant d'air ascendant desdits petits nuages, et
"une attaque" qui consiste à provoquer une averse depuis les nuages en croissance en dispersant un premier ou des premiers produits chimiques hygroscopiques endothermiques, de préférence de la poudre de chlorure de sodium, dans ledit haut/épaulement du nuage et un second ou des seconds produits chimiques hygroscopiques endothermiques, de préférence de l'urée, à ladite base du nuage, simultanément, pour provoquer l'agrandissement de la zone de l'averse depuis ledit nuage dense vers une zone cible désignée au vent.

12. Procédé de modification du temps utilisant la "technologie royale pour faire de la pluie" au moyen d'un ensemencement chimique selon la revendication 1, dans lequel ledit ensemencement chimique peut être effectué à l'intérieur ou à l'extérieur d'un nuage ou bien en haut ou en dessous dudit nuage, soit pour un nuage isolé soit pour une bande de nuages quelconque.

13. Procédé de modification du temps utilisant la "technologie royale pour faire de la pluie" au moyen d'un ensemencement chimique pour amorcer une précipitation à partir d'un nuage froid ou d'un nuage en phase mixte comprenant l'étape consistant en "une attaque" selon la revendication 7, en agissant à un stade antérieur à la formation de grêle.

14. Procédé de modification du temps utilisant la "technologie royale pour faire de la pluie" au moyen d'un ensemencement chimique pour provoquer une averse à partir de nuages stratiformes recouvrant une zone comprenant des étapes consistant à utiliser un ensemencement chimique selon la revendication 1, modifiées en larguant en alternance, des produits chimiques hygroscopiques exothermiques et des produits chimiques hygroscopiques endothermiques pour recouvrir lesdits nuages et en dispersant les produits chimiques hygroscopiques en haut des nuages en développement.
